# EUROPEAN PATENT APPLICATION

(11) **EP 4 717 950 A1**
(43) Date of publication of application: **01.04.2026**
(21) Application number: 24810177.6
(22) Date of filing: 29.04.2024
(51) Int. Cl.: F16K 11/07, F16K 31/06

(54) **VALVE ASSEMBLY AND SOLENOID VALVE**

(30) Priority: 23.05.2023 CN 202310588355; 23.05.2023 CN 202310595106
(71) Applicant: Zhejiang Dunan Artificial Environment Co., Ltd., Shaoxing Zhejiang 311800 (CN)
(72) Inventor: XU, Mingjie, Shaoxing, Zhejiang 311800 (CN); WANG, Fugang, Shaoxing, Zhejiang 311800 (CN); SHA, Haijian, Shaoxing, Zhejiang 311800 (CN)
(74) Representative: Studio Torta S.p.A.
(86) International application number: PCT/CN2024/090637
(87) International publication number: WO 2024/239930

(57) **Abstract**

A valve assembly and a solenoid valve. The valve assembly comprises a valve bonnet (200a), a valve element (300a) and a driving device (400a), wherein the valve bonnet (200a) is provided with a first accommodating cavity (201a), the valve element (300a) is located in the first accommodating cavity (201a), and the driving device (400a) can drive the valve element (300a) to move along an inner wall of the first accommodating cavity (201a); the valve element (300a) is provided with a second accommodating cavity (301a), and a chamber (308a) is formed between the valve element (300a) and the valve bonnet (200a); and the second accommodating cavity (301a) is in communication with the first accommodating cavity (201a) outside the chamber (308a). Fluid flowing into the valve bonnet (200a) comprises at least a first branch and a second branch, the first branch flowing out through a first channel where the chamber (308a) is located, and the second branch flowing out through a second channel located outside the chamber (308a). The number of pipelines and valves in a system can be reduced.

## Description

### CROSS-REFERENCE TO RELATED APPLICATION

The present disclosure claims priority to Chinese Patent Application No. 202310588355.6, filed on May 23, 2023 and Chinese Patent Application No. 202310595106.X, filed on May 23, 2023, which are incorporated herein by reference in their entireties.

### TECHNICAL FIELD

The present disclosure relates to a valve assembly and a solenoid valve.

### BACKGROUND

In the related art, solenoid valves include a driving device, a valve seat, and a valve core disposed in a cavity of the valve seat. The driving device drives the valve core to move so as to open or close a single flow path of the solenoid valve. When it is necessary to realize circulation of a plurality of flow paths, a plurality of solenoid valves are required, leading to a large number of pipelines and valves in a system.

### SUMMARY

The present disclosure aims to provide a valve assembly and a solenoid valve to address the technical problem in the related art that a plurality of solenoid valves are required to realize circulation of a plurality of flow paths, leading to a large number of pipelines and valves in a system.

According to a first aspect of the present disclosure, the present disclosure provides a valve assembly, including a valve bonnet, a valve core, and a driving device, wherein the valve bonnet has a first accommodating cavity, the valve core is located in the first accommodating cavity, and the driving device is capable of driving the valve core to move along an inner wall of the first accommodating cavity; the valve core has a second accommodating cavity, a chamber is formed between the valve core and the valve bonnet, and the second accommodating cavity is in communication with the first accommodating cavity outside the chamber; and fluid flowing into the valve bonnet at least includes a first branch and a second branch, the first branch flows out through a first channel where the chamber is located, and the second branch flows out through a second channel outside the chamber.

In an embodiment of the present disclosure, the driving device includes a solenoid coil, a shaft rod, a stationary iron core, and a movable iron core, the valve assembly further includes a sleeve fitted over the stationary iron core and the movable iron core, the solenoid coil is fitted over the sleeve, the stationary iron core is fixedly connected to the sleeve, the movable iron core is movably mounted in the sleeve, and the valve core is connected to the movable iron core through the shaft rod; the valve core has a first working position and a second working position; and the valve core is in the second working position when the movable iron core is magnetically attracted with the stationary iron core, and the valve core is in the first working position when the movable iron core is separated from the stationary iron core to a maximum distance; or the valve core is in the first working position when the movable iron core is magnetically attracted with the stationary iron core, and the valve core is in the second working position when the movable iron core is separated from the stationary iron core to the maximum distance.

In an embodiment of the present disclosure, the valve assembly further includes a reset member disposed between the stationary iron core and the movable iron core.

In an embodiment of the present disclosure, the valve core includes a pipe body and a top plate, the top plate is fixedly connected to one end of the pipe body and is provided with a through-hole, another end of the pipe body is open and is provided with an annular protrusion, and an edge of the top plate and an edge of the annular protrusion are separately connected to an inner wall of the valve bonnet in a sealing manner to form the chamber among an outer wall of the pipe body, the inner wall of the valve bonnet, the top plate and the annular protrusion.

In an embodiment of the present disclosure, the valve bonnet has at least one first communication hole and at least one second communication hole, the driving device includes a first magnetic attraction structure and a second magnetic attraction structure, and the valve core is connected to the second magnetic attraction structure; the second magnetic attraction structure is magnetically attracted with or separated from the first magnetic attraction structure, wherein the second magnetic attraction structure has a separation position, a transition position, and an attraction position arranged in sequence along a direction approaching the first magnetic attraction structure; when the second magnetic attraction structure is in the separation position, and during movement of the second magnetic attraction structure from the separation position to the transition position, the valve core is in a stationary state, and the second accommodating cavity is in communication with the first communication hole; and during movement of the second magnetic attraction structure from the transition position to the attraction position, the second accommodating cavity is in communication with the second communication hole.

In an embodiment of the present disclosure, an inner cavity of the pipe body is the second accommodating cavity; and the second accommodating cavity is in communication with the first accommodating cavity at two ends of the valve core.

In an embodiment of the present disclosure, the second magnetic attraction structure includes a magnetic attraction part, a shaft rod and a buffer member; one end of the magnetic attraction part is magnetically attracted with or separated from the first magnetic attraction structure, and another end of the magnetic attraction part is connected to the shaft rod; a portion of the shaft rod located in the second accommodating cavity is provided with a limiting protruding part; the buffer member is fitted over the shaft rod and located between the limiting protruding part and the top plate; during the movement of the second magnetic attraction structure from the separation position to the transition position, the buffer member is compressed, and the valve core is in the stationary state; and during the movement of the second magnetic attraction structure from the transition position to the attraction position, the buffer member is compressed, and the shaft rod drives the valve core to move towards the first magnetic attraction structure.

In an embodiment of the present disclosure, a circumferential outer surface of the valve bonnet is provided with a plurality of grooves arranged along an axial direction of the valve bonnet; a groove bottom of each groove is provided with a communication hole; and two adjacent grooves opposite to the valve core are in communication with each other through the chamber.

In an embodiment of the present disclosure, the communication hole includes a plurality of communication sub-holes that are spaced apart along a circumferential direction of each groove.

In an embodiment of the present disclosure, the communication sub-holes are elongated holes, and a length of each elongated hole along a circumferential direction of the valve bonnet is greater than a length of each elongated hole along the axial direction of the valve bonnet.

According to a second aspect of the present disclosure, the present disclosure further provides a solenoid valve, including a valve seat and the valve assembly mentioned above. The valve seat has a valve cavity, and the valve bonnet is fixedly mounted in the valve cavity; the valve seat is provided with a first flow sub-port, a second flow sub-port, a second flow port and a third flow port that are in communication with the valve cavity, the valve bonnet is provided with communication holes at least at positions corresponding to the second flow sub-port, the second flow port and the third flow port; the communication holes are in communication with the chamber or in communication with the first accommodating cavity outside the chamber. The valve core has a first working position and a second working position. The valve core is configured in such a way that when in the first working position, the first channel includes the second flow sub-port, the communication hole corresponding to the second flow sub-port, the chamber, the communication hole corresponding to the second flow port, and the second flow port, all of which are in communication in sequence, and the second channel includes the first flow sub-port, the first accommodating cavity located outside the chamber, the communication hole corresponding to the third flow port, and the third flow port, all of which are in communication in sequence. The valve core is further configured in such a way that when in the second working position, the first channel includes the second flow sub-port, the communication hole corresponding to the second flow sub-port, the chamber, the communication hole corresponding to the third flow port, and the third flow port, all of which are in communication in sequence, and the second channel includes the first flow sub-port, the first accommodating cavity located outside the chamber, the communication hole corresponding to the second flow port, and the second flow port, all of which are in communication in sequence.

In an embodiment of the present disclosure, a circumferential outer surface of the valve bonnet is provided with a plurality of grooves arranged along an axial direction of the valve bonnet, and seal members are provided between both sides of each groove and an inner wall of the valve seat, respectively.

In an embodiment of the present disclosure, an inner wall of the valve cavity is provided with a stopper; and the valve core abuts against the stopper when the valve core is in the second working position.

According to a third aspect of the present disclosure, the present disclosure further provides a solenoid valve, including a valve seat and the valve assembly mentioned above. The valve seat has a valve cavity as well as at least one first flow port, at least one second flow port, and at least one third flow port that are in communication with the valve cavity; at least a portion of the valve bonnet is located in the valve cavity, the first communication hole is provided at a position of the valve bonnet corresponding to the second flow port, and the second communication hole is provided at a position of the valve bonnet corresponding to the third flow port. When the second magnetic attraction structure is in the separation position, and during movement of the second magnetic attraction structure from the separation position to the transition position, the at least one first flow port is in communication with the second flow port. During movement of the second magnetic attraction structure from the transition position to the attraction position, the at least one first flow port is in communication with the third flow port.

In an embodiment of the present disclosure, one first flow port is provided; when the second magnetic attraction structure is in the separation position, and during the movement from the separation position to the transition position, a first flow sub-port is in communication with the second flow port through the second accommodating cavity, the through-hole, portions of the first accommodating cavity located at two ends of the valve core, and the first communication hole; when the second magnetic attraction structure is in the attraction position, the first flow sub-port is in communication with the third flow port through the first accommodating cavity corresponding to the second communication hole, and the second communication hole; or one first flow port is provided; the chamber is formed between an outer wall of the valve core and an inner wall of the valve bonnet and is separated from the second accommodating cavity; the valve bonnet further includes a third communication hole at a position corresponding to a second flow sub-port; when the second magnetic attraction structure is in the separation position and during the movement from the separation position to the transition position, the second flow sub-port is in communication with the third flow port through the third communication hole, the chamber and the second communication hole; and when the second magnetic attraction structure is in the attraction position, the second flow sub-port is in communication with the second flow port through the third communication hole, the chamber and the first communication hole.

In an embodiment of the present disclosure, two first flow ports are provided and include a first flow sub-port and a second flow sub-port, the first flow sub-port being in communication with the second accommodating cavity; the chamber is formed between an outer wall of the valve core and an inner wall of the valve bonnet and is separated from the second accommodating cavity; the valve bonnet further includes a third communication hole at a position corresponding to the second flow sub-port; when the second magnetic attraction structure is in the separation position and during the movement from the separation position to the transition position, the first flow sub-port is in communication with the second flow port through the second accommodating cavity, the through-hole, the first accommodating cavity located at two ends of the valve core, and the first communication hole, and the second flow sub-port is in communication with the third flow port through the third communication hole, the chamber, and the second communication hole; and when the second magnetic attraction structure is in the attraction position, the first flow sub-port is in communication with the third flow port through portions of the first accommodating cavity located outside the chamber, and the second communication hole, and the second flow sub-port is in communication with the second flow port through the third communication hole, the chamber, and the first communication hole.

In an embodiment of the present disclosure, directions of the first flow sub-port, the second flow sub-port, the second flow port, and the third flow port are perpendicular to an axis of the valve bonnet.

The beneficial effects of the present disclosure are mainly as follows:

For the valve assembly according to the present disclosure, the valve core is located in the first accommodating cavity of the valve bonnet, and the chamber is formed between the outer wall of the valve core and the inner wall of the valve bonnet. That is, the chamber is separated, by the valve core, from a portion of the first accommodating cavity excluding the chamber, while the second accommodating cavity is in communication with the portion of the first accommodating cavity excluding the chamber. During use, the valve core is driven by the driving device to move along an inner wall of the first accommodating cavity, which may realize that the fluid flowing into the valve bonnet at least includes the first branch and the second branch, the first branch flowing out through the first channel where the chamber is located, and the second branch flowing out through the second channel where the portion of the first accommodating cavity excluding the chamber is located, so that the number of pipelines and valves required in the system can be reduced.

### BRIEF DESCRIPTION OF THE DRAWINGS

The above and other features and advantages of the present disclosure will become clearer by describing the exemplary embodiments in detail with reference to the accompanying drawings.
FIG. 1 is a schematic structural view of a solenoid valve with a valve core in a first working position according to a first embodiment of the present disclosure;
FIG. 2 is a schematic structural view of the solenoid valve with the valve core in a second working position according to the first embodiment of the present disclosure;
FIG. 3 is a schematic structural view of a valve bonnet in the first embodiment of the present disclosure;
FIG. 4 is a schematic structural view showing cooperation between the valve core and a shaft rod in the first embodiment of the present disclosure;
FIG. 5 is a schematic structural view of a stopper in the first embodiment of the present disclosure;
FIG. 6 is another schematic view of a driving device in the first embodiment of the present disclosure;
FIG. 7 is a schematic structural view of a valve assembly with the valve core in the first working position according to the first embodiment of the present disclosure;
FIG. 8 is a schematic structural view of the valve assembly with the valve core in the second working position according to the first embodiment of the present disclosure;
FIG. 9 is a schematic structural view of a flow path switching valve in a de-energized state according to a second embodiment of the present disclosure;
FIG. 10 is a schematic structural view of the flow path switching valve in an instantaneous state of switching to energization according to the second embodiment of the present disclosure;
FIG. 11 is a partially enlarged view at A in FIG. 10;
FIG. 12 is a schematic structural view of the flow path switching valve in an energized state according to the second the second embodiment of the present disclosure;
FIG. 13 is a schematic structural view of a variant example of the flow path switching valve in the de-energized state according to the second embodiment of the present disclosure;
FIG. 14 is a schematic structural view of the variant example of the flow path switching valve in the energized state according to the second embodiment of the present disclosure;
FIG. 15 is a schematic structural view of a core shaft in the second embodiment of the present disclosure;
FIG. 16 is a schematic structural view of a shaft rod in the second embodiment of the present disclosure;
FIG. 17 is a schematic structural view of a valve bonnet in the second embodiment of the present disclosure;
FIG. 18 is a schematic structural view of a stopper in the second embodiment of the present disclosure;
FIG. 19 is a schematic structural view of a valve assembly in the de-energized state according to the second embodiment of the present disclosure;
FIG. 20 is a schematic structural view of the valve assembly in the instantaneous state of switching to energization according to the second embodiment of the present disclosure;
FIG. 21 is a schematic structural view of the valve assembly in the energized state according to the second embodiment of the present disclosure.

### Reference numerals:

100a- valve seat; 102a - second flow port; 103a-third flow port; 104a-first flow sub-port; 105a- second flow sub-port; 200a-valve bonnet; 201a- first accommodating cavity; 202a-communication hole; 2021a- communication sub-hole; 203a- groove; 204a- first seal member; 205a- annular limiting protrusion; 300a- valve core; 301a- second accommodating cavity; 302a- through-hole; 303a- pipe body; 304a- top plate; 305a- annular protrusion; 306a- second seal member; 307a- third seal member; 308a- chamber; 400a- driving device; 401a- stationary iron core; 402a- movable iron core; 403a- solenoid coil; 404a- sleeve; 500a- shaft rod; 501a-balancing hole; 502a- balancing channel; 600a- reset member; 700a- stopper; 701a- annular stop edge; 702a- annular limiting groove;
100b- valve seat; 101b- first flow port; 102b- second flow port; 103b- third flow port; 104b-first flow sub-port; 105b- second flow sub-port; 106b- casing pipe; 200b- valve core; 201b- second accommodating cavity; 202b- through-hole; 203b- pipe body; 204b- top plate; 205b- annular protrusion; 206b- second seal member; 207b- third seal member; 208b- chamber; 300b- driving device; 310b- first magnetic attraction structure; 320b- second magnetic attraction structure; 321b- magnetic attraction part; 322b- shaft rod; 3221b- limiting boss; 32211b- boss surface; 3222b- limiting protruding part; 303b- buffer member; 304b- reset member; 305b- solenoid coil; 400b- valve bonnet; 401b- first accommodating cavity; 4021b-first communication hole; 4022b- second communication hole; 4023b- third communication hole; 403b- groove; 404b- first seal member; 405b- annular limiting protrusion; 406b- annular recess; 500b- stopper; 501b- annular stop edge; 502b- annular limiting groove; 600b- buffer gap.

### DETAILED DESCRIPTION

Exemplary embodiments will be now described more fully with reference to the accompanying drawings. However, the exemplary embodiments may be implemented in a variety of forms and should not be construed as being limited to the embodiments set forth herein. Although relative terms such as "above" and "below" are used herein to describe the relationship of one component relative to another component, such terms are used herein only for the sake of convenience, for example, in accordance with exemplary orientations depicted in the accompanying drawings. It can be understood that if the referenced device is inversed upside down, a component described as "above" will become a component described as "below". Other relative terms such as "top" and "bottom" also have similar meanings. When a structure is described as "above" another structure, it probably means that the structure is integrally formed on another structure, or the structure is "directly" disposed on another structure, or the structure is "indirectly" disposed on another structure through an additional structure.

Terms "one," "a/an," "the" and "said" are used herein to indicate the presence of one or more elements/component parts/and others. Terms "including" and "having" have an inclusive meaning which means that there may be additional elements/component parts/and others in addition to the listed elements/component parts/and others. Terms such as "first" and "second" are used herein only as markers and do not limit the number of objects modified after them.

### First Embodiment

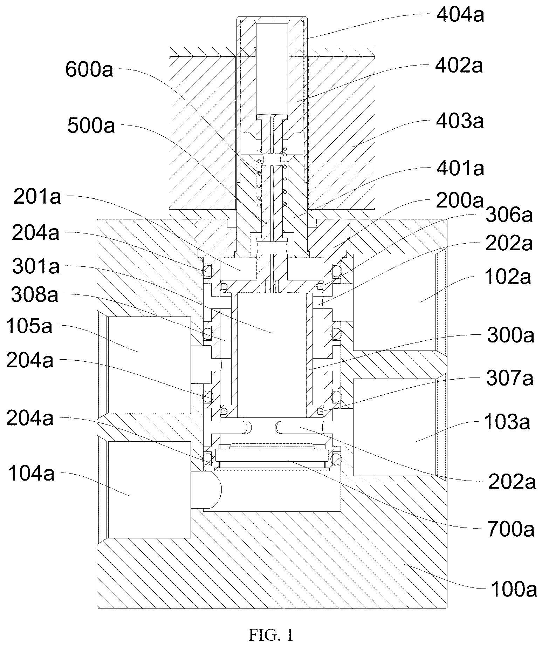

Referring to FIGS. 1 to 6, this embodiment provides a solenoid valve, including a valve seat 100a and a valve assembly. The valve assembly includes a valve bonnet 200a, a valve core 300a, and a driving device 400a. The valve seat 100a has a valve cavity. The valve bonnet 200a is fixedly mounted in the valve cavity. The valve seat 100a is provided with a first flow sub-port 104a, a second flow sub-port 105a, a second flow port 102a, and a third flow port 103a, all of which are in communication with the valve cavity. The valve bonnet 200a is provided with communication holes 202a at least at positions corresponding to the second flow sub-port 105a, the second flow port 102a, and the third flow port 103a, respectively, and the communication holes 202a are a first communication hole, a second communication hole, and a third communication hole, respectively. A chamber 308a is formed between an outer wall of the valve core 300a and an inner wall of the valve bonnet 200a. The communication holes 202a are in communication with the chamber 308a, or in communication with a first accommodating cavity 201a outside the chamber 308a. The valve core 300a has a first working position and a second working position. The valve core 300a is configured in such a way that when it is in the first working position, a first channel includes the second flow sub-port 105a, the communication hole 202a corresponding to the second flow sub-port 105a, the chamber 308a, the communication hole 202a corresponding to the second flow port 102a, and the second flow port 102a, all of which are in communication in sequence, and a second channel includes the first flow sub-port 104a, the first accommodating cavity 201a located outside the chamber 308a, the communication hole 202a corresponding to the third flow port 103a, and the third flow port 103a, all of which are in communication in sequence. The valve core 300a is further configured in such a way that when it is in the second working position, the first channel includes the second flow sub-port 105a, the communication hole 202a corresponding to the second flow sub-port 105a, the chamber 308a, the communication hole 202a corresponding to the third flow port 103a, and the third flow port 103a, all of which are in communication in sequence, and the second channel includes the first flow sub-port 104a, the first accommodating cavity 201a located outside the chamber 308a, the communication hole 202a corresponding to the second flow port 102a, and the second flow port 102a, all of which are in communication in sequence.

For the solenoid valve according to this embodiment, the valve core 300a is located in the first accommodating cavity 201a of the valve bonnet 200a, and the chamber 308a is formed between the outer wall of the valve core 300a and the inner wall of the valve bonnet 200a. That is, the chamber 308a is separated, by the valve core 300a, from a portion of the first accommodating cavity 201a excluding the chamber 308a, while a second accommodating cavity 301a is in communication with the portion of the first accommodating cavity 201a excluding the chamber 308a. During use, the valve core 300a is driven by the driving device 400a to move along an inner wall of the first accommodating cavity 201a, which may realize that fluid flowing into the valve seat 100a and the valve bonnet 200a at least includes a first branch and a second branch. The first branch flows out through the first channel where the chamber 308a is located, and the second branch flows out through the second channel where the portion of the first accommodating cavity 201a excluding the chamber 308a is located, so that the number of pipelines and valves required in a system can be reduced.

In an embodiment, the valve seat 100a is provided with the first flow sub-port 104a, the second flow sub-port 105a, the second flow port 102a, and the third flow port 103a, all of which are in communication with the valve cavity; the valve bonnet 200a is provided with communication holes 202a at least at positions corresponding to the second flow sub-port 105a, the second flow port 102a, and the third flow port 103a, and the communication holes 202a are in communication with the chamber 308a or in communication with the first accommodating cavity 201a outside the chamber 308a; and the valve core 300a has the first working position and the second working position. The valve core 300a is configured in such a way that when it is in the first working position, the first channel is formed by communicating the second flow sub-port 105a, the chamber 308a, the second flow port 102a, and the corresponding communication holes 202a with one another, and the second channel is formed by communicating the first flow sub-port 104a, the first accommodating cavity 201a located outside the chamber 308a, and the corresponding communication hole 202a with one another. The valve core 300a is further configured in such a way that when it is in the second working position, the first channel is formed by communicating the second flow sub-port 105a, the chamber 308a, the third flow port 103a, and the corresponding communication holes 202a with one another, and the second channel is formed by communicating the first flow sub-port 104a, the second accommodating cavity 301a, the first accommodating cavity 201a located outside the chamber 308a, and the corresponding communication hole 202a with one another.

For example, the valve core 300a is configured in such a way that when it is in the first working position, the first channel includes the second flow sub-port 105a, the communication hole corresponding to the second flow sub-port 105a, the chamber 308a, the communication hole corresponding to the second flow port 102a, and the second flow port 102a, all of which are in communication in sequence, and the second channel includes the first flow sub-port 104a, the first accommodating cavity 201a located outside the chamber 308a, the communication hole corresponding to the third flow port 103a, and the third flow port 103a, all of which are in communication in sequence.

The valve core 300a is further configured in such a way that when it is in the second working position, the first channel includes the second flow sub-port 105a, the communication hole corresponding to the second flow sub-port 105a, the chamber 308a, the communication hole corresponding to the third flow port 103a, and the third flow port 103a, all of which are in communication in sequence, and the second channel includes the first flow sub-port 104a, the first accommodating cavity 201a located outside the chamber 308a, the communication hole corresponding to the second flow port 102a, and the second flow port 102a, all of which are in communication in sequence.

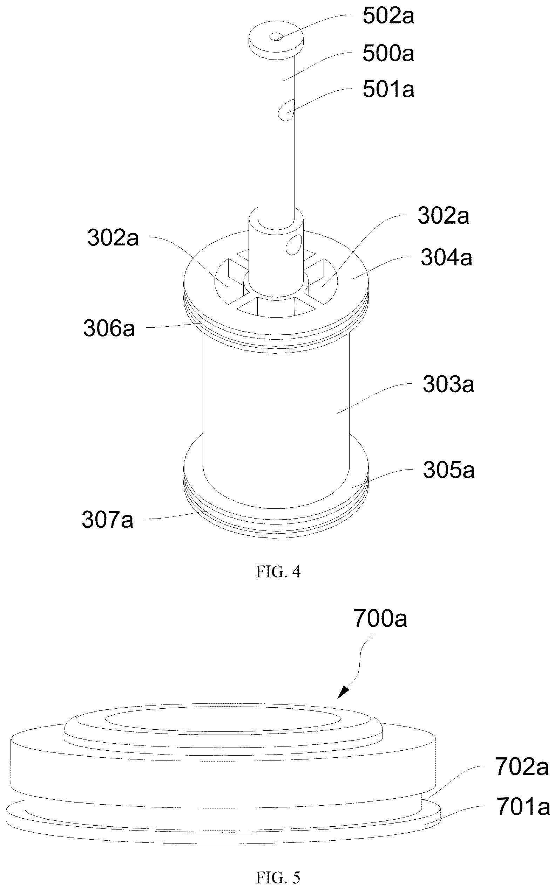

In an embodiment, as shown in FIG. 4, the valve core 300a includes a pipe body 303a and a top plate 304a. The top plate 304a is fixedly connected to one end of the pipe body 303a. The top plate 304a is provided with a through-hole 302a, and the through-hole 302 is in communication with the second accommodating cavity 301a. The other end of the pipe body 303a is open and is provided with an annular protrusion 305a. An edge of the top plate 304a and an edge of the annular protrusion 305a are separately connected to the inner wall of the valve bonnet 200a in a sealing manner, thereby forming the chamber 308a among an outer wall of the pipe body 303a, the inner wall of the valve bonnet 200a, the top plate 304a, and the annular protrusion 305a.

Referring to FIGS. 1 and 4, the edge of the top plate 304a protrudes from the outer wall of the pipe body 303a, and the top plate 304a may be integrally formed with or may be welded to the pipe body 303a. A second seal member 306a is provided between a circumferential edge of the top plate 304a and the inner wall of the valve bonnet 200a. A third seal member 307a is provided between a circumferential edge of the annular protrusion 305a and the inner wall of the valve bonnet 200a. In this way, a space enclosed by the outer wall of the pipe body 303a, the inner wall of the valve bonnet 200a, a lower surface of a portion of the top plate 304a protruding from the pipe body 303a, and an upper surface of the annular protrusion 305a is formed as the chamber 308a. When the valve core 300a is switched between the first working position and the second working position, the chamber 308a is capable of being in communication with different communication holes 202a, thereby achieving flow path switching.

The first flow sub-port 104a is in communication with the second accommodating cavity 301a. The number of communication holes 202a is three, and three communication holes 202a are in communication with the second flow sub-port 105a, the second flow port 102a, and the third flow port 103a, respectively.

The valve core 300a is configured in such a way that when it is in the first working position, the first flow sub-port 104a is in communication with the third flow port 103a, and the second flow sub-port 105a is in communication with the second flow port 102a. The valve core 300a is further configured in such a way that when it is in the second working position, the first flow sub-port 104a is in communication with the second flow port 102a, and the second flow sub-port 105a is in communication with the third flow port 103a. The valve core 300a is further configured in such a way that when it is in the second working position, the valve core 300a is located between the second flow port 102a and the first flow sub-port 104a, and the first flow sub-port 104a is in communication with the second flow port 102a through the centrally penetrated pipe body 303a and the through-hole 302a in the top plate.

For example, when the first flow sub-port 104a is in communication with the third flow port 103a, and the second flow sub-port 105a is in communication with the second flow port 102a, one of the first flow sub-port 104a and the third flow port 103a serves as a fluid inlet while the other thereof serves as a fluid outlet; and one of the second flow sub-port 105a and the second flow port 102a serves as a fluid inlet while the other thereof serves as a fluid outlet, which will not be limited herein.

Specifically, as shown in FIG. 1, when the driving device 400a drives the valve core 300a to move to the first working position within the first accommodating cavity 201a, the first flow sub-port 104a is in communication with the third flow port 103a through the first accommodating cavity 201a and the communication hole 202a corresponding to the third flow port 103a so as to form the second channel, and meanwhile the second flow sub-port 105a is in communication with the second flow port 102a through the chamber 308a and the communication hole 202a corresponding to the second flow port 102a so as to form the first channel.

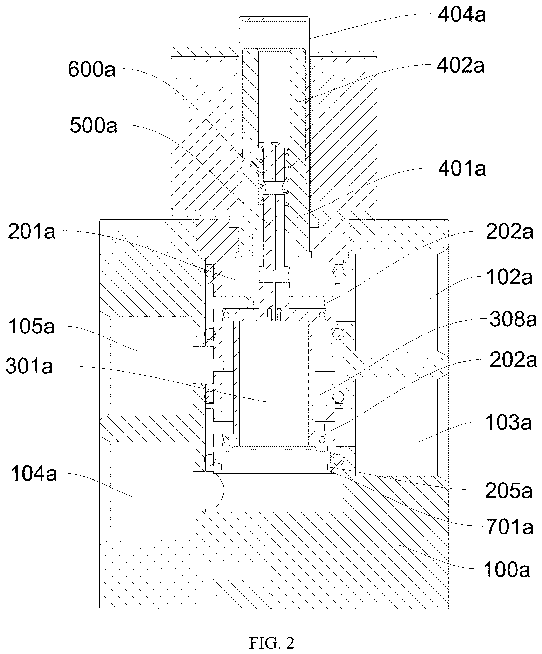

As shown in FIG. 2, when the driving device 400a drives the valve core 300a to move to the second working position within the first accommodating cavity 201a, the first flow sub-port 104a is in communication with the second flow port 102a through the second accommodating cavity 301a, the through-hole 302a, and the communication hole 202a corresponding to the second flow port 102a so as to form the second channel, and meanwhile the second flow sub-port 105a is in communication with the third flow port 103a through the chamber 308a and the communication hole 202a corresponding to the third flow port 103a so as to form the first channel.

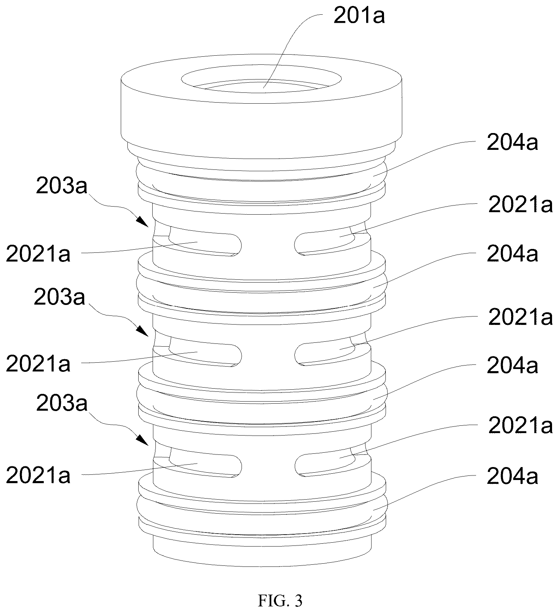

In an embodiment, as shown in FIG. 3, a plurality of grooves 203a are provided on a circumferential outer surface of the valve bonnet 200a. Seal members are provided between both sides of each groove 203a and an inner wall of the valve seat 100a, respectively. The communication hole 202a is located at a groove bottom of each groove 203a. Two adjacent grooves 203a are in communication with each other through the chamber 308a.

For example, as shown in FIG. 1, the valve bonnet 200a is configurated in a cylindrical structure and is inverted in the valve cavity. A cylinder bottom of the cylindrical structure is secured and mounted to the valve seat 100a through fasteners such as bolts and nuts. An inner cavity of the cylindrical structure forms the first accommodating cavity 201a. The cylinder bottom is provided with a mounting hole configured to allow the driving device 400a to pass through. Three grooves 203a are provided on the circumferential outer surface of the valve bonnet 200a. The seal members between both sides of each groove 203a and the inner wall of the valve seat 100a are designated as first seal members 204a, and the number of first seal members 204a is four. That is, there is one groove 203a between any two adjacent first seal members 204a. This configuration may achieve sealing between the valve bonnet 200a and the valve seat 100a, and ensure that the first flow sub-port 104a, the second flow sub-port 105a, the second flow port 102a, and the third flow port 103a are in communication exclusively with their respective corresponding communication holes 202a, thereby ensuring the accuracy of the flow path switching.

For example, the first seal members 204a may be seal rings.

It should be noted that the number of the grooves 203a may be selected according to the number of the first flow sub-port 104a, the second flow sub-port 105a, the second flow port 102a, and the third flow port 103a.

In an embodiment, as shown in FIG. 3, the communication hole 202a includes a plurality of communication sub-holes 2021a, which are spaced apart from one another in a circumferential direction of the groove 203a. This configuration allows fluid to exit through the plurality of communication sub-holes 2021a in a common groove 203a, thereby increasing a fluid flow area, which is particularly suitable for a valve body with a large diameter. For example, the number of communication sub-holes 2021a is at least two.

When diameters of the first flow sub-port 104a, the second flow sub-port 105a, the second flow port 102a, and the third flow port 103a increase, hole diameters of the communication holes 202a on the valve bonnet 200a also need to be increased correspondingly. If the communication holes 202a are circular holes, the increase of the hole diameters of the circular holes would lead to an excessively long axial length of the valve bonnet 200a, and thus lead to a relatively large movement stroke of the valve core 300a within the first accommodating cavity 201a, and result in relatively high resistance to motion of the valve core 300a driven by the driving device 400a, which may lead to failure in the flow path switching.

In an embodiment, in order to increase the fluid flow area and shorten the movement stroke of the valve core 300a, thereby improving the efficiency of the flow path switching, the communication sub-holes 2021a are configured as elongated holes, and a length of each elongated hole along a circumferential direction of the valve bonnet 200a is greater than a length of each elongated hole along an axial direction of the valve bonnet 200a.

Since the length of each elongated hole along the circumferential direction of the valve bonnet 200a is greater than the length of each elongated hole along the axial direction of the valve bonnet 200a, an axial dimension of the valve bonnet 200a may be reduced while ensuring a sufficiently large flow area of the elongated hole. Consequently, the movement stroke of the valve core 300a within the first accommodating cavity 201a may be shortened, and the efficiency of the flow path switching may be improved.

For example, the elongated holes may include but not limited to oblong holes, rectangular holes, or elliptical holes.

In an embodiment, the driving device includes a solenoid coil 403a, a shaft rod 500a, a stationary iron core 401a, and a movable iron core 402a. The solenoid valve further includes a sleeve 404a, which passes through a central cavity of the solenoid coil 403a. At least a portion of the stationary iron core 401a is fixedly connected to the sleeve 404a. The movable iron core 402a is movably mounted within the sleeve 404a. The valve core 300a is mounted to the movable iron core 402a. The movable iron core 402a is capable of being magnetically attracted with or separated from the stationary iron core 401a, to position the valve core 300a in the first working position or the second working position. When the movable iron core 402a is magnetically attracted with the stationary iron core 401a, the valve core 300a is in the second working position; and when the movable iron core 402a is separated from the stationary iron core 401a to a maximum distance, the valve core 300a is in the first working position.

As shown in FIG. 1, a portion of the stationary iron core 401a is fixedly mounted within the mounting hole, and the movable iron core 402a is located above the stationary iron core 401a. The sleeve 404a passes through the central cavity of the solenoid coil 403a, and a sleeve bottom of the sleeve 404a faces upwards. The movable iron core 402a is located within the sleeve 404a, and the sleeve bottom of the sleeve 404a is configured to limit the movable iron core 402a. For example, the movable iron core 402a immediately stops moving when the movable iron core 402a abuts against the sleeve bottom, at which point the movable iron core 402a is separated from the stationary iron core 401a.

In some embodiments, the valve core 300a is fixedly connected to the movable iron core 402a through the shaft rod 500a, and the stationary iron core 401a is provided with a hole for the shaft rod 500a to pass through. The movable iron core 402a and the shaft rod 500a are provided with balancing channels 502a in communication with each other, which may enable rapid internal balance within the valve cavity, reduce resistance encountered during the movement of the valve core 300a, and enhance smoothness during the movement of the valve core 300a. In this embodiment, extension directions of the balancing channels 502a are consistent with axial directions of the movable iron core 402a and the shaft rod 500a.

In some embodiments, as shown in FIG. 4, the shaft rod 500a is provided with a balancing hole 501a, and the balancing hole 501a runs through the shaft rod 500a in the axial direction of the shaft rod 500a and is in communication with the balancing channel 502a. The arrangement of the balancing hole 501a may further balance air pressure and thus further improve the pressure balancing effect within the valve cavity, ensuring the smoothness of the movement of the valve core 300a.

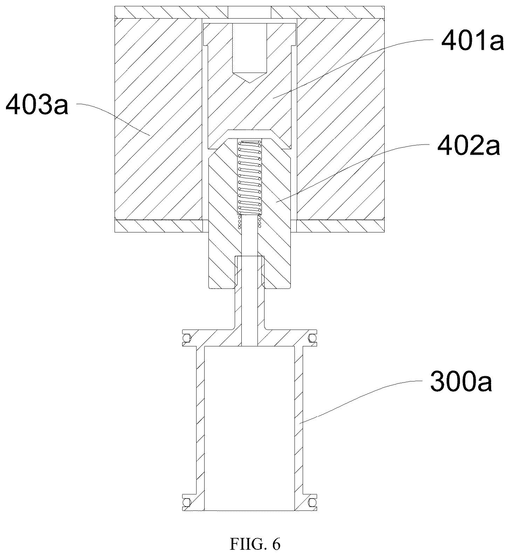

It should be noted that positions of the stationary iron core 401a and the movable iron core 402a may be interchanged. That is, the stationary iron core 401a may be located above the movable iron core 402a, as shown in FIG. 6. In a structure shown in FIG. 6, when the movable iron core 402a is magnetically attracted with the stationary iron core 401a, the valve core 300a is in the first working position; and when the movable iron core 402a is separated from the stationary iron core 401a to the maximum distance, the valve core 300a is in the second working position.

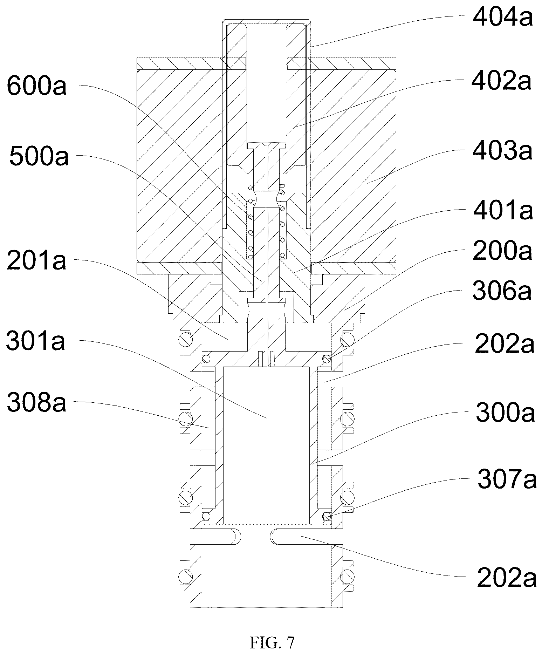

In an embodiment, as shown in FIGS. 1 and 7, the solenoid valve further includes a reset member 600a, and the reset member 600a is disposed between the stationary iron core 401a and the movable iron core 402a and is configured to cause the movable iron core 402a to move away from the stationary iron core 401a.

Referring to FIG. 1, an end of the stationary iron core 401a facing the movable iron core 402a is provided with a receiving groove. The reset member 600a may be a compression spring. The reset member 600a is fitted over the shaft rod 500a. One end of the reset member 600a abuts against a groove bottom of the receiving groove and the other end of the reset member 600a abuts against the movable iron core 402a.

For example, as shown in FIG. 1, in a de-energized state, the valve core 300a is in the first working position, the first flow sub-port 104a is in communication with the third flow port 103a through the first accommodating cavity 201a and the communication hole 202a corresponding to the third flow port 103a, and meanwhile the second flow sub-port 105a is in communication with the second flow port 102a through the chamber 308a and the communication hole 202a corresponding to the second flow port 102a.

Referring to FIG. 2, in an energized state, the movable iron core 402a moves towards the stationary iron core 401a and is attracted to the stationary iron core 401a, while the reset member 600a is compressed. At this point, the valve core 300a is in the second working position, the first flow sub-port 104a is in communication with the second flow port 102a through the second accommodating cavity 301a, the through-hole 302a, and the communication hole 202a corresponding to the second flow port 102a, and meanwhile the second flow sub-port 105a is in communication with the third flow port 103a through the chamber 308a and the communication hole 202a corresponding to the third flow port 103a.

In an embodiment, as shown in FIGS. 1, 2 and 5, the solenoid valve further includes a stopper 700a mounted in the valve cavity and configured to support the valve core 300a. An inner cavity of the stopper 700a is in communication with the second accommodating cavity 301a.

Referring to FIGS. 1, 2, and 5, the stopper 700a is fixedly mounted to a bottom of the valve bonnet 200a by fasteners such as bolts, and a circumferential outer surface of the stopper 700a is tightly fitted with a circumferential inner surface of the valve bonnet 200a. The stopper 700a is provided with an annular stop edge 701a, and an upper surface of the annular stop edge 701a abuts against a lower end surface of the valve bonnet 200a. The circumferential outer surface of the stopper 700a is provided with an annular limiting groove 702a; the circumferential inner surface of the valve bonnet 200a is provided with an annular limiting protrusion 205a; and the annular limiting protrusion 205a is limited in the annular limiting groove 702a. In such a way, the fixed connection between the stopper 700a and the valve bonnet 200a may be achieved, and the sealing performance between the stopper 700a and the valve bonnet 200a may be enhanced.

For example, the stopper 700a is made of metal.

The solenoid valve according to this embodiment has a high degree of integration and may achieve switching among a plurality of flow paths.

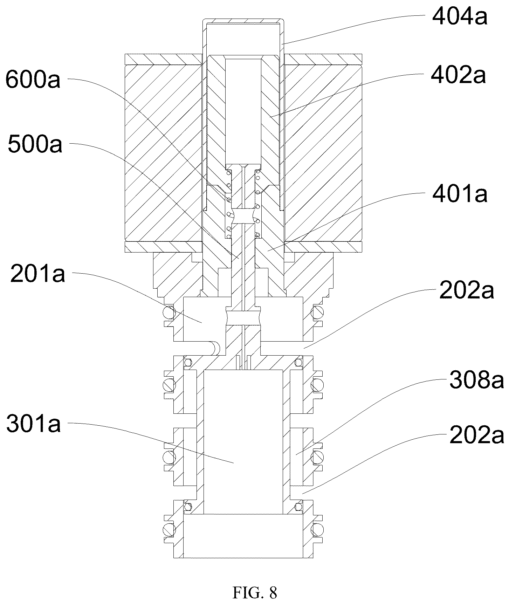

Referring to FIGS. 7 and 8, this embodiment further provides a valve assembly that may be independently used as a cartridge valve.

It should be noted that in the solenoid valve according to this embodiment, all parts except the valve seat collectively form the valve assembly.

The valve assembly according to this embodiment includes a valve bonnet 200a, a valve core 300a, and a driving device 400a. The valve bonnet 200a has a first accommodating cavity 201a, and the valve core 300a is located in the first accommodating cavity 201a. The driving device 400a is capable of driving the valve core 300a to move along an inner wall of the first accommodating cavity 201a. The valve core 300a has a second accommodating cavity 301a. A chamber 308a is formed between the valve core 300a and the valve bonnet 200a. The second accommodating cavity 301a is in communication with the first accommodating cavity 201a outside the chamber 308a. A fluid flowing into the valve bonnet 200a at least includes a first branch and a second branch; the first branch flows out through a first channel where the chamber is located; and the second branch flows out through a second channel outside the chamber.

For the valve assembly according to this embodiment, the valve core 300a is located in the first accommodating cavity 201a of the valve bonnet 200a, and the chamber 308a is formed between an outer wall of the valve core 300a and an inner wall of the valve bonnet 200a. That is, the chamber 308a is separated, by the valve core 300a, from a portion of the first accommodating cavity 201a excluding the chamber 308a, while a second accommodating cavity 301a is in communication with the portion of the first accommodating cavity 201a excluding the chamber 308a. During use, the valve core 300a is driven by the driving device 400a to move along an inner wall of the first accommodating cavity 201a, which may realize that the fluid flowing into the valve bonnet 200a at least includes the first branch and the second branch, the first branch flowing out through the first channel where the chamber 308a is located, and the second branch flowing out through the second channel where the portion of the first accommodating cavity 201a excluding the chamber 308a is located, so that the number of pipelines and valves required in the system can be reduced.

In an embodiment, as shown in FIGS. 7-8, the driving device includes a solenoid coil 403a, a shaft rod 500a, a stationary iron core 401a, and a movable iron core 402a. The valve assembly further includes a sleeve 404a; the sleeve 404a is fitted over the stationary iron core 401a and the movable iron core 402a; the solenoid coil 403a is fitted over the sleeve 404a. The stationary iron core 401a is fixedly connected to the sleeve 404a, while the movable iron core 402a is movably mounted within the sleeve 404a. The valve core 300a is connected to the movable iron core 402a through the shaft rod 500a. The valve core 300a has the first working position and the second working position. When the movable iron core 402a is magnetically attracted with the stationary iron core 401a, the valve core 300a is in the second working position; and when the movable iron core 402a is separated from the stationary iron core 401a to the maximum distance, the valve core 300a is in the first working position.

Certainly, it is possible that the valve core 300a is in the first working position when the movable iron core 402a is magnetically attracted with the stationary iron core 401a; and the valve core 300a is in the second working position when the movable iron core 402a is separated from the stationary iron core 401a to the maximum distance.

The structure of the driving device in this embodiment is identical to the structure of the driving device in the solenoid valve according to this embodiment, and will not be described in detail herein.

In an embodiment, as shown in FIGS. 7-8, the valve assembly further includes a reset member 600a disposed between the stationary iron core 401a and the movable iron core 402a.

An end of the stationary iron core 401a facing the movable iron core 402a is provided with a receiving groove. The reset member 600a may be a compression spring. The reset member 600a is fitted over the shaft rod 500a. One end of the reset member 600a abuts against a groove bottom of the receiving groove and the other end of the reset member 600a abuts against the movable iron core 402a.

It should be noted that the structure and arrangement of the reset member in this embodiment are identical to those of the reset member in the solenoid valve according to this embodiment, and will not be repeated herein.

In an embodiment, as shown in FIG. 4, the valve core 300a includes a pipe body 303a and a top plate 304a. The top plate 304a is fixedly connected to one end of the pipe body 303a. The top plate 304a is provided with a through-hole. The other end of the pipe body 303a is open and is provided with an annular protrusion 305a. An edge of the top plate 304a and an edge of the annular protrusion 305a are separately connected to the inner wall of the valve bonnet 200a in a sealing manner, thereby forming the chamber 308a among an outer wall of the pipe body 303a, the inner wall of the valve bonnet 200a, the top plate 304a, and the annular protrusion 305a.

In an embodiment, as shown in FIG. 3, a circumferential outer surface of the valve bonnet 200a is provided with a plurality of grooves 203a arranged along an axial direction of the valve bonnet. A groove bottom of each groove 203a is provided with the communication hole 202a. Two adjacent grooves 203a opposite to the valve core 300a are in communication with each other through the chamber 308a.

In an embodiment, the communication hole 202a includes a plurality of communication sub-holes 2021a, which are spaced apart from one another in a circumferential direction of the groove 203a.

In an embodiment, the communication sub-holes 2021a are configured as elongated holes, and a length of each elongated hole along a circumferential direction of the valve bonnet 200a is greater than a length of each elongated hole along an axial direction of the valve bonnet 200a.

It should be noted that the structures of the valve core and the valve bonnet in this embodiment are identical to those of the valve core and the valve bonnet in the solenoid valve according to this embodiment, and thus will not be repeated herein.

### Second Embodiment

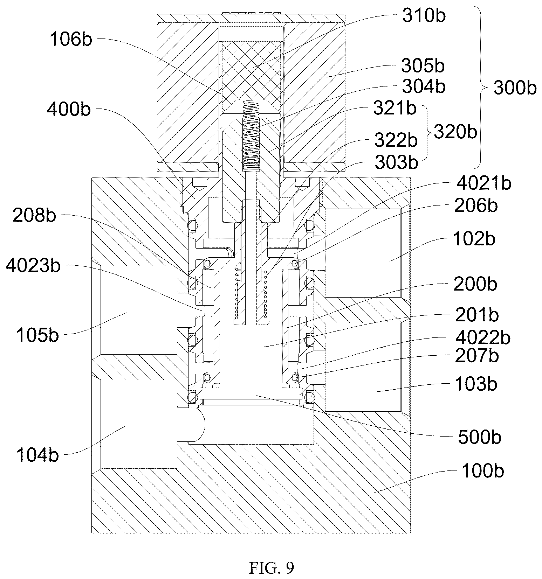

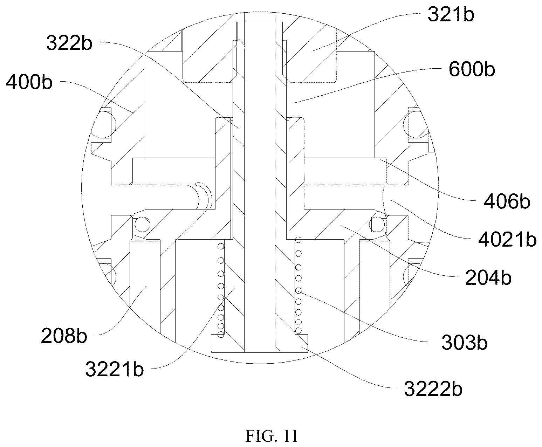

As shown in FIGS. 9 to 18, this embodiment provides a solenoid valve, including a valve seat 100b and a valve assembly. The valve assembly includes a valve bonnet 400b, a valve core 200b, and a driving device 300b. The valve bonnet 400b has a first accommodating cavity 401b, at least one first communication hole 4021b, and at least one second communication hole 4022b. The valve core 200b is located in the first accommodating cavity 401b and has a second accommodating cavity 201b. The driving device 300b includes a first magnetic attraction structure 310b and a second magnetic attraction structure 320b. The valve core 200b is connected to the second magnetic attraction structure 320b. The second magnetic attraction structure 320b is magnetically attracted with or separated from the first magnetic attraction structure 310b. The second magnetic attraction structure 320b has a separation position, a transition position, and an attraction position arranged in sequence along a direction approaching the first magnetic attraction structure 310b. When the second magnetic attraction structure 320b is in the separation position, and during its movement from the separation position to the transition position, the valve core 200b is in a stationary state, and the second accommodating cavity 201b is in communication with the first communication hole 4021b. During movement of the second magnetic attraction structure 320b from the transition position to the attraction position, the second accommodating cavity 201b is in communication with the second communication hole 4022b. The valve seat 100b includes a valve cavity as well as at least one first flow port 101b, at least one second flow port 102b, and at least one third flow port 103b, all of which are in communication with the valve cavity. At least a portion of the valve bonnet 400b is located in the valve cavity. The first communication hole 4021b is located at a position of the valve bonnet 400b corresponding to the second flow port 102b. The second communication hole 4022b is located at a position of the valve bonnet 400b corresponding to the third flow port 103b. When the second magnetic attraction structure 320b is in the separation position, and during its movement from the separation position to the transition position, at least one first flow port 101b is in communication with the second flow port 102b. During movement of the second magnetic attraction structure 320b from the transition position to the attraction position, at least one first flow port 101b is in communication with the third flow port 103b.

For the solenoid valve according to this embodiment, when the second magnetic attraction structure 320b is in the separation position, and during its movement to the transition position, the valve core 200b is in the stationary state, and at this point, the second magnetic attraction structure 320b does not need to overcome resistive forces such as pressure differential force and friction force acting on the valve core, and allows the second accommodating cavity 201b to be in communication with the first communication hole 4021b and meanwhile allows at least one first flow port 101b to be in communication with the second flow port 102b through the second accommodating cavity 201b and the first communication hole 4021b. Under the action of the driving device 300b, the second magnetic attraction structure 320b moves towards the first magnetic attraction structure 310b under electromagnetic force. Since the electromagnetic force between the second magnetic attraction structure 320b and the first magnetic attraction structure 310b increases as a distance between them decreases, the electromagnetic force when the second magnetic attraction structure 320b is in the transition position is greater than the electromagnetic force when the second magnetic attraction structure 320b is in the separation position. After the second magnetic attraction structure 320b moves to the transition position, the greater electromagnetic force enables the second magnetic attraction structure 320b to overcome the resistive forces such as the pressure differential force and the friction force acting on the valve core 200b, and drives the valve core 200b to move smoothly towards the first magnetic attraction structure 310b until the second magnetic attraction structure 320b moves to the attraction position. At this point, the second accommodating cavity 201b is in communication with the second communication hole 4022b, and meanwhile at least one first flow port 101b is in communication with the third flow port 103b through a third communication hole 4023b, thereby achieving the smooth switching among different flow paths.

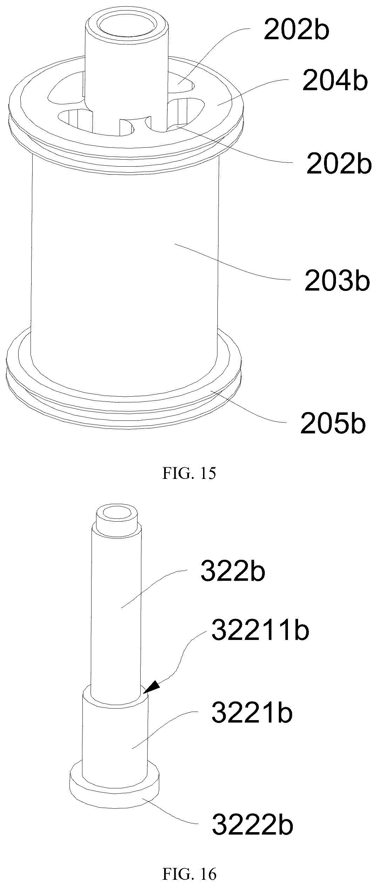

In some embodiments, as shown in FIG. 16, the valve core 200b includes a pipe body 203b and a top plate 204b. An inner cavity of the pipe body 203b is the second accommodating cavity 201b. The top plate 204b is fixedly connected to one end of the pipe body 203b and provided with a through-hole 202b. The other end of the pipe body 203b is open, forming a hole in communication with the through-hole 202b. For example, a plurality of through-holes 202b may be provided. The second accommodating cavity 201b is in communication with the first accommodating cavity 401b at both ends of the valve core 200b, and the first accommodating cavity at both ends of the valve core refer to portions of the first accommodating cavity located at both ends of the valve core.

In some embodiments, an end of the pipe body 203b away from the top plate 204b is provided with an annular protrusion 205b. An edge of the top plate 204b and an edge of the annular protrusion 205b are separately connected to an inner wall of the valve bonnet 400b in a sealing manner. A chamber 208b is formed among an outer wall of the pipe body 203b, the inner wall of the valve bonnet 400b, the top plate 204b, and the annular protrusion 205b.

For example, referring to FIGS. 9 and 16, a second seal member 206b is provided between a circumferential edge of the top plate 204b and the inner wall of the valve bonnet 400b. A third seal member 207b is provided between a circumferential edge of the annular protrusion 205b and the inner wall of the valve bonnet 400b. In this way, a space enclosed by the outer wall of the pipe body 203b, the inner wall of the valve bonnet 400b, a lower surface of a portion of the top plate 204b protruding from the pipe body 203b, and an upper surface of the annular protrusion 205b is formed as the chamber 208b. When the valve core 200b moves to different positions within the first accommodating cavity 401b, the chamber 208b is capable of being in communication with different communication holes, thereby achieving flow path switching.

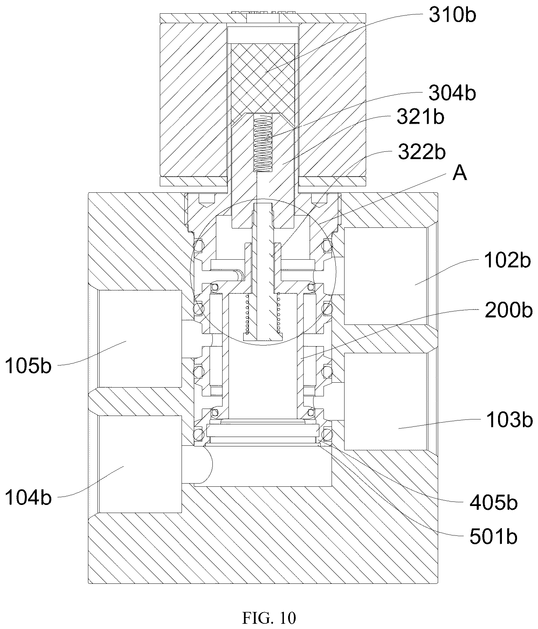

For example, as shown in FIG. 9, when the solenoid valve is in a de-energized state, the second magnetic attraction structure 320b is in the separation position. At this time, the first flow sub-port 104b is in communication with the second flow port 102b through the second accommodating cavity 201b, the through-hole 202b, and the first communication hole 4021b corresponding to the second flow port 102b; and meanwhile, the second flow sub-port 105b is in communication with the third flow port 103b through the chamber 208b and the second communication hole 4022b corresponding to the third flow port 103b. As shown in FIG. 10, when the solenoid valve is at the instantaneous moment of switching to energization, the second magnetic attraction structure 320b is capable of moving from the separation position to the transition position. During the movement, the first flow sub-port 104b is in communication with the second flow port 102b through the second accommodating cavity 201b, the through-hole 202b, and the first communication hole 4021b corresponding to the second flow port 102b; and meanwhile, the second flow sub-port 105b is in communication with the third flow port 103b through the chamber 208b and the second communication hole 4022b corresponding to the third flow port 103b.

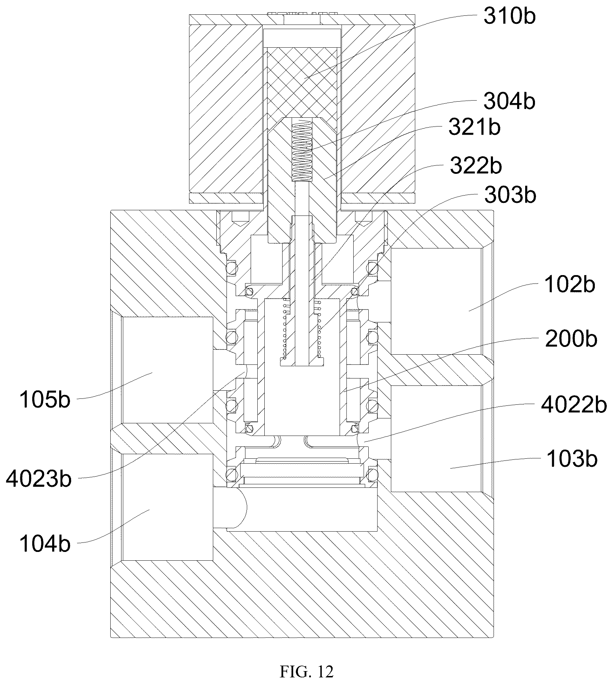

Referring to FIG. 12, when the solenoid valve is in an energized state, the second magnetic attraction structure 320b is in the attraction position, i.e., the second magnetic attraction structure 320b and the first magnetic attraction structure 310b are attracted together by the electromagnetic force. At this time, the first flow sub-port 104b is in communication with the third flow port 103b through a portion of the first accommodating cavity 401b located outside the chamber 208b and the second communication hole 4022b corresponding to the third flow port 103b, and the second flow sub-port 105b is in communication with the second flow port 102b through the chamber 208b and the first communication hole 4021b corresponding to the second flow port 102b.

In some embodiments, as shown in FIG. 9, the second magnetic attraction structure 320b includes a magnetic attraction part 321b and a shaft rod 322b. One end of the magnetic attraction part 321b is capable of being magnetically attracted with or separated from the first magnetic attraction structure 310b, and the other end of the magnetic attraction part 321b is connected to the shaft rod 322b. The shaft rod 322b passes through the second accommodating cavity 201b. A portion of the shaft rod 322b located within the second accommodating cavity 201b is provided with a limiting boss 3221b. The shaft rod 322b is configured in such a way that when the second magnetic attraction structure 320b is in the separation position and during its movement to the transition position, there is a gap between a boss surface 32211b of the limiting boss 3221b and the top plate 204b of the valve core 200b. Alternatively, the shaft rod 322b is configured in such a way that, during the movement of the second magnetic attraction structure 320b from the transition position to the separation position, at least a portion of the shaft rod 322b is in contact with the top plate 204b of the valve core 200b, and drives the valve core 200b to move towards the first magnetic attraction structure 310b.

Specifically, as shown in FIGS. 9 and 16, in the de-energized state, the second magnetic attraction structure 320b is in the separation position, and the magnetic attraction part 321b is separated from the first magnetic attraction structure 310b. At this time, there is a gap between the boss surface 32211b of the limiting boss 3221b and the top plate 204b of the valve core 200b. At the instantaneous moment of switching to energization, as shown in FIG. 10, the second magnetic attraction structure 320b is capable of moving from the separation position to the transition position. During this movement, there is still a gap between the boss surface 32211b of the limiting boss 3221b and the top plate 204b of the valve core 200b, the gap gradually decreases, and the valve core 200b is in the stationary state. When the second magnetic attraction structure 320b moves to the transition position, the boss surface 32211b of the limiting boss 3221b abuts against a surface of the top plate 204b of the valve core 200b away from the first magnetic attraction structure 310b. In the energized state, as shown in FIG. 12, the second magnetic attraction structure 320b continues moving towards the first magnetic attraction structure 310b, and the electromagnetic force acting on the second magnetic attraction structure 320b is sufficient to overcome gravity of the second magnetic attraction structure 320b, gravity of the valve core 200b, and resistance acting on the valve core 200b, thereby ensuring that the second magnetic attraction structure 320b may drive the valve core 200b to move smoothly towards the first magnetic attraction structure 310b until the second magnetic attraction structure 320b moves to the attraction position, i.e., the magnetic attraction part 321b and the first magnetic attraction structure 310b are attracted together by the electromagnetic force.

For example, a maximum distance between the boss surface 32211b of the limiting boss 3221b and the surface of the top plate 204b away from the first magnetic attraction structure 310b is equal to a distance between the separation position and the transition position of the second magnetic attraction structure 320b. In this way, the maximum distance between the boss surface 32211b of the limiting boss 3221b and the surface of the top plate 204b away from the first magnetic attraction structure 310b may reflect the distance between the separation position and the transition position. When the distance between the separation position and transition position needs to be adjusted, it can be achieved by adjusting the maximum distance between the boss surface 32211b of the limiting boss 3221b and the surface of the top plate 204b away from the first magnetic attraction structure 310b.

It should be noted that positions of the first magnetic attraction structure 310b and the second magnetic attraction structure 320b may also be interchanged. That is, the first magnetic attraction structure 310b may be located below the second magnetic attraction structure 320b.

In an embodiment, as shown in FIGS. 9 and 16, the second magnetic attraction structure 320b further includes a buffer member 303b. An end of the limiting boss 3221b away from the magnetic attraction part 321b is provided with a limiting protruding part 3222b. The buffer member 303b is mounted on the shaft rod 322b; one end of the buffer member 303b is connected to the limiting protruding part 3222b; and the other end of the buffer member 303b is connected to the top plate 204b.

For example, the buffer member 303b may be a compression spring. The buffer member 303b is fitted over the shaft rod 322b, and one end of the buffer member 303b is connected to the limiting protruding part 3222b while the other end of the buffer member 303b is connected to the top plate 204b. When the boss surface 32211b of the limiting boss 3221b abuts against the surface of the top plate 204b of the valve core 200b away from the first magnetic attraction structure 310b, the buffer member 303b may provide a buffering effect, alleviating impact force applied on the valve core 200b by the limiting boss 3221b, and maintaining the stability during the movement of the valve core 200b.

Referring to FIGS. 9 and 10, at the instantaneous moment of switching the solenoid valve from the de-energized state to the energized state, the buffer member 303b is compressed. After energization, under an elastic force of the buffer member 303b, the valve core 200b moves by a certain distance towards the first magnetic attraction structure 310b until the top plate 204b abuts against an annular recess 406b in the inner wall of the valve bonnet 400b. At this point, the first flow sub-port 104b is in communication with the third flow port 103b through the first accommodating cavity 401b and the second communication hole corresponding to the third flow port 103b, while the second flow sub-port 105b is in communication with the second flow port 102b through the chamber 208b and the first communication hole corresponding to the second flow port 102b.

In an embodiment, the driving device 300b further includes a reset member 304b disposed between the first magnetic attraction structure 310b and the second magnetic attraction structure 320b. The reset member 304b is configured to cause the second magnetic attraction structure 320b to move away from the first magnetic attraction structure 310b.

As shown in FIG. 9, an end of the magnetic attraction part 321b facing the second magnetic attraction structure 320b is provided with a receiving groove. The reset member 304b may be a compression spring and may be disposed in the receiving groove. One end of the reset member 304b is connected to a groove bottom of the receiving groove, and the other end of the reset member 304b is connected to the first magnetic attraction structure 310b.

For example, as shown in FIG. 9, in the de-energized state, the second magnetic attraction structure 320b is in the separation position. As shown in FIG. 10, at the instantaneous moment of switching to energization, the second magnetic attraction structure 320b moves towards the first magnetic attraction structure 310b; the boss surface 32211b of the limiting boss 3221b abuts against the surface of the top plate 204b of the valve core 200b away from the first magnetic attraction structure 310b; the reset member 304b and the buffer member 303b are both in a compressed state; and there is a buffer gap 600b between a top end of the valve core 200b and the magnetic attraction part 321b. As shown in FIG. 12, in the energized state, the second magnetic attraction structure 320b continues moving towards the first magnetic attraction structure 310b, and meanwhile drives the valve core 200b to move towards the first magnetic attraction structure 310b until the second magnetic attraction structure 320b moves to the attraction position. At this point, the buffer member 303b releases energy, pushing the valve core 200b towards the magnetic attraction part 321b until the top end of the valve core 200b abuts against the magnetic attraction part 321b.

In some embodiments, the shaft rod 322b is a hollow rod with two open ends, the groove bottom of the receiving groove is provided with a via hole, and the hollow rod is in communication with the receiving groove through the via hole, so that the resistance encountered by the valve core 200b during movement may be reduced, and the smoothness of movement of the valve core 200b may be enhanced.

In some embodiments, a circumferential side wall of the valve bonnet 400b is provided with a plurality of grooves 403b that are spaced apart along an axial direction of the valve bonnet 400b. The first communication hole and the second communication hole are located at groove bottoms of two grooves 403b, respectively.

In this embodiment, the grooves 403b are annular grooves to ensure the circulation of the fluid within the chamber 208b.

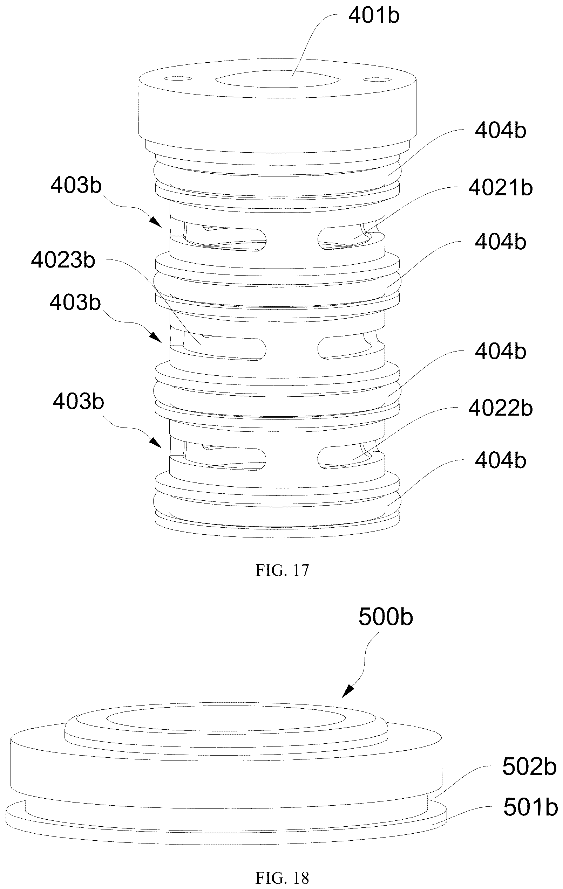

In some embodiments, as shown in FIG. 17, each of the first communication hole 4021b and the second communication hole 4022b includes a plurality of communication sub-holes, and the plurality of communication sub-holes are spaced apart along a circumferential direction of the groove 403b. In this way, the fluid may flow out through the plurality of communication sub-holes in a common groove 403a, thereby increasing a fluid flow area, which is particularly suitable for a valve body with a large diameter.

In some embodiments, in order to increase the fluid flow area and shorten the movement stroke of the valve core 200b, thereby improving the efficiency of the flow path switching, the communication sub-holes are configured as elongated holes, and a length of each elongated hole along a circumferential direction of the valve bonnet 400b is greater than a length of each elongated hole along the axial direction of the valve bonnet 400b.

Since the length of each elongated hole along the circumferential direction of the valve bonnet 400b is greater than the length of each elongated hole along the axial direction of the valve bonnet 400b, an axial dimension of the valve bonnet 400b may be reduced while ensuring a sufficiently large flow area of the elongated hole. Consequently, the movement stroke of the valve core 200b within the first accommodating cavity 401b may be shortened, and the efficiency of the flow path switching may be improved.

For example, the elongated holes may include but not limited to oblong holes, rectangular holes, or elliptical holes.

In an embodiment, as shown in FIG. 9, the solenoid valve further includes a casing pipe 106b disposed at an end of the valve seat 100b. The driving device 300b further includes a solenoid coil 305b. The casing pipe 106b passes through a central cavity of the solenoid coil 305b. The first magnetic attraction structure 310b and at least a portion of the second magnetic attraction structure 320b are located within the casing pipe 106b.

The number of the first flow port 101b, the number of the second flow port 102b, and the number of the third flow port 103b may each be one. Alternatively, at least one of the first flow port 101b, the second flow port 102b, and the third flow port 103b may be provided in plural. For example, the number of the first flow ports 101b may be two, while the number of the second flow port 102b and the number of the third flow port 103b may each be one.

In an embodiment, opening directions of the first flow port 101b, the second flow port 102b, and the third flow port 103b are all perpendicular to an axis of the valve bonnet 400b. In this way, the valve core 200b may move without need to overcome the pressure differential force, thereby enabling rapid flow path switching under zero pressure differential.

In a possible design of this embodiment, the number of the first flow ports 101b are two, the two first flow ports 101b include a first flow sub-port 104b and a second flow sub-port 105b, and the first flow sub-port 104b is in communication with the second accommodating cavity 201b; the chamber 208b is formed between an outer wall of the valve core 200b and the inner wall of the valve bonnet 400b and is separated from the second accommodating cavity 201b; the valve bonnet 400b further includes a third communication hole 4023b positioned corresponding to the second flow sub-port 105b. When the second magnetic attraction structure 320b is in the separation position, and during its movement from the separation position to the transition position, the first flow sub-port 104b is in communication with the second flow port 102b through the second accommodating cavity 201b, the through-hole, the first accommodating cavity 401b located at two ends of the valve core 200b, and the first communication hole; and the second flow sub-port 105b is in communication with the third flow port 103b through the third communication hole, the chamber 208b, and the second communication hole. When the second magnetic attraction structure 320b is in the attraction position, the first flow sub-port 104b is in communication with the third flow port 103b through a portion of the first accommodating cavity 401b located outside the chamber 208b and the second communication hole; and the second flow sub-port 105b is in communication with the second flow port 102b through the third communication hole, the chamber 208b, and the first communication hole.

Specifically, the number of the first flow ports is two, the two first flow ports include the first flow sub-port 104b and the second flow sub-port 105b, and the first flow sub-port 104b is in communication with the second accommodating cavity 201b. Seal members provided between both sides of the groove 403b and the inner wall of the valve seat 100b are named as first seal members 404b. The number of the first seal members 404b is four, that is, one groove 403b is provided between each two adjacent first seal members 404b. This configuration may achieve sealing between the valve bonnet 400b and the valve seat 100b, and ensure that the first flow ports 101b, the second flow port 102b, and the third flow port 103b are each in communication only with their respective corresponding communication holes, thereby guaranteeing the accuracy of the flow path switching.

For example, the first seal members 404b may be seal rings.

It should be noted that the number of grooves 403b may be selected according to the number of the first flow port 101b, the second flow port 102b, and the third flow port 103b.

In an embodiment, the solenoid valve further includes a stopper 500b mounted within the valve cavity and configured to support the valve core 200b. An inner cavity of the stopper 500b is in communication with the second accommodating cavity 201b.

For example, the stopper 500b may be made of metal.

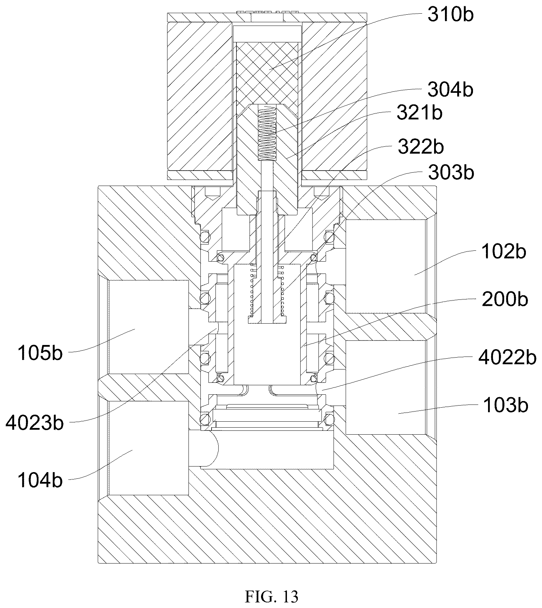

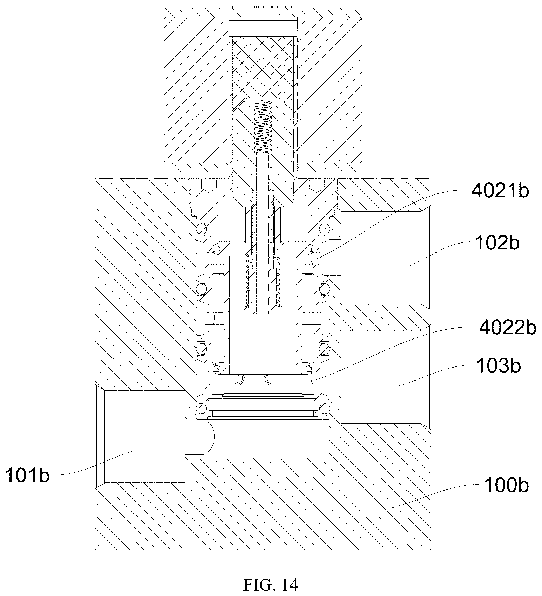

In a second possible design of this embodiment, as shown in FIG. 13, the number of the first flow port 101b, the number of the second flow port 102b, and the number of the third flow port 103b may each be one. Since the number of the first flow port 101b is one, when in the de-energized state, the first flow port 101b is in communication with the second flow port 102b through the second accommodating cavity 201b, the through-hole 202b, and the first communication hole 4021b corresponding to the second flow port 102b. As shown in FIG. 14, when in the energized state, the first flow port 101b is in communication with the third flow port 103b through the first accommodating cavity 401b and the second communication hole 4022b corresponding to the third flow port 103b, thereby achieving flow path switching.

It should be noted that, in the second possible design, the position of the first flow port 101b may also be the same as the position of the second flow sub-port 105b shown in FIG. 1. The chamber 208b is formed between the outer wall of the valve core 200b and the inner wall of the valve bonnet 400b and is separated from the second accommodating cavity 201b. The valve bonnet 400b further includes a third communication hole corresponding to the position of the second flow sub-port 105b. When the second magnetic attraction structure 320b is in the separation position, and during its movement from the separation position to the transition position, the second flow sub-port 105b is in communication with the third flow port 103b through the third communication hole, the chamber 208b, and the second communication hole. When the second magnetic attraction structure 320b is in the attraction position, the second flow sub-port 105b is in communication with the second flow port 102b through the third communication hole, the chamber 208b, and the first communication hole. In such a case, in the de-energized state, the first flow port 101b is in communication with the third flow port 103b through the chamber 208b and the second communication hole 4022b corresponding to the third flow port 103b; and in the energized state, the first flow port 101b is in communication with the second flow port 102b through the chamber 208b and the first communication hole 4021b corresponding to the second flow port 102b.

It should be noted that the second flow port 102b and the third flow port 103b serve as fluid outlets when the first flow port 101b serves as a fluid inlet; and the second flow port 102b and the third flow port 103b serve as fluid inlets when the first flow port 101b serves as a fluid outlet.

This embodiment further provides a valve assembly that may be independently used as a cartridge valve.

It should be noted that in the solenoid valve according to this embodiment, all parts except the valve seat collectively form the valve assembly.

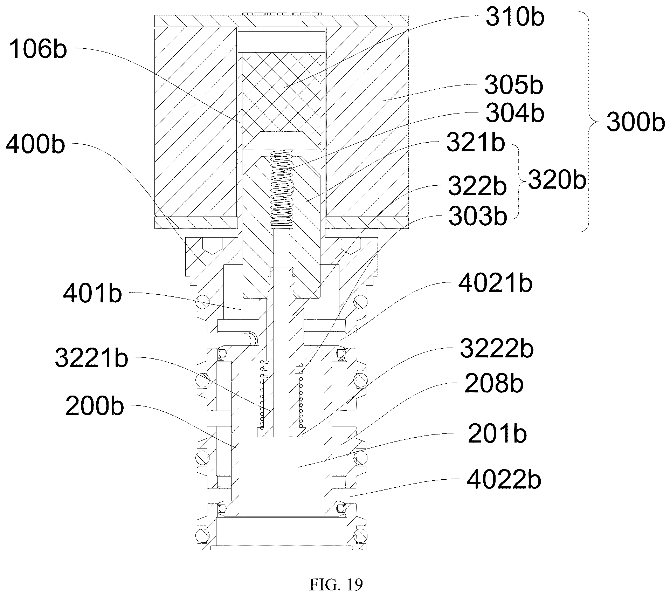

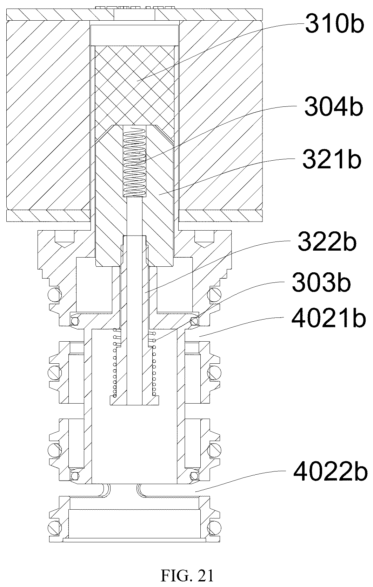

Referring to FIGS. 19 to 21, the valve assembly according to this embodiment includes a valve bonnet 400b, a valve core 200b, and a driving device 300b. The valve bonnet 400b has a first accommodating cavity 401b, at least one first communication hole 4021b, and at least one second communication hole 4022b. The valve core 200b is located within the first accommodating cavity 401b and has a second accommodating cavity 201b. The driving device 300b includes a first magnetic attraction structure 310b and a second magnetic attraction structure 320b, and the valve core 200b is connected to the second magnetic attraction structure 320b. The second magnetic attraction structure 320b is magnetically attracted with or separated from the first magnetic attraction structure 310b. The second magnetic attraction structure 320b has a separation position, a transition position, and an attraction position arranged in sequence along a direction approaching the first magnetic attraction structure 310b. When the second magnetic attraction structure 320b is in the separation position, and during its movement from the separation position to the transition position, the valve core 200b is in a stationary state, and the second accommodating cavity 201b is in communication with the first communication hole 4021b. During movement of the second magnetic attraction structure 320b from the transition position to the attraction position, the second accommodating cavity 201b is in communication with the second communication hole 4022b.

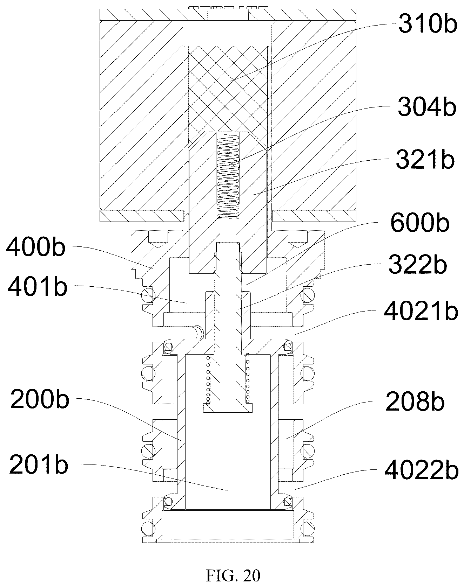

For the valve assembly according to this embodiment, as shown in FIG. 19, when the second magnetic attraction structure 320b is in the separation position, and during its movement to the transition position, the valve core 200b is in the stationary state, and at this point, the second magnetic attraction structure 320b does not need to overcome resistive forces such as pressure differential force and friction force acting on the valve core 200b, and allows the second accommodating cavity 201b to be in communication with the first communication hole. Under the action of the driving device 300b, the second magnetic attraction structure moves towards the first magnetic attraction structure under electromagnetic force. Since the electromagnetic force between the second magnetic attraction structure 320b and the first magnetic attraction structure 310b increases as a distance between them decreases, the electromagnetic force when the second magnetic attraction structure 320b is in the transition position is greater than the electromagnetic force when the second magnetic attraction structure 320b is in the separation position. As shown in FIG. 20, after the second magnetic attraction structure 320b moves to the transition position, the greater electromagnetic force enables the second magnetic attraction structure 320b to overcome the resistive forces such as the pressure differential force and the friction force acting on the valve core, and drives the valve core 200b to move smoothly towards the first magnetic attraction structure 310b until the second magnetic attraction structure 320b moves to the attraction position. At this point, as shown in FIG. 13, the second accommodating cavity 201b is in communication with the second communication hole 4022b, thereby achieving the smooth switching among different flow paths.

In an embodiment, as shown in FIG. 15, the valve core 200b includes a pipe body 203b and a top plate 204b. An inner cavity of the pipe body 203b is the second accommodating cavity 201b. The top plate 204b is fixedly connected to one end of the pipe body 203b, and the other end of the pipe body 203b is open. The top plate 204b is provided with a through-hole. The second accommodating cavity 201b is in communication with the first accommodating cavity 401b at both ends of the valve core 200b.

In an embodiment, as shown in FIGS. 12-13, the second magnetic attraction structure 320b includes a magnetic attraction part 321b, a shaft rod 322b, and a buffer member 303b. One end of the magnetic attraction part 321b is magnetically attracted with or separated from the first magnetic attraction structure 310b, and the other end of the magnetic attraction part 321b is connected to the shaft rod 322b. As shown in FIG. 16, a portion of the shaft rod 322b located within the second accommodating cavity 201b is provided with a limiting protruding part 3222b. The buffer member 303b is fitted over the shaft rod 322b and located between the limiting protruding part 3222b and the top plate 204b. During the movement of the second magnetic attraction structure 320b from the separation position to the transition position, the buffer member 303b is compressed, and the valve core 200b is in the stationary state. During the movement of the second magnetic attraction structure 320b from the transition position to the attraction position, the buffer member 303b is compressed, and the shaft rod 322b drives the valve core 200b to move towards the first magnetic attraction structure 310b.

In an embodiment, a circumferential side wall of the valve bonnet 400b is provided with a plurality of grooves 403b that are spaced apart along an axial direction of the valve bonnet 400b. The first communication hole and the second communication hole are located at groove bottoms of two grooves 403b, respectively.

In an embodiment, each of the first communication hole 4021b and the second communication hole 4022b includes a plurality of communication sub-holes, and the plurality of communication sub-holes are spaced apart along a circumferential direction of the groove 403b.

It should be noted that the structures of the valve core and the valve bonnet in this embodiment are identical to those of the valve core and the valve bonnet in the solenoid valve according to this embodiment, and thus will not be repeated herein.

It should be understood that the present disclosure does not limit its application to the detailed structure and arrangement of the components mentioned in this specification. The present disclosure may have other embodiments and may be implemented and executed in various ways. The aforementioned variations and modifications fall into the scope of the present disclosure. It should be understood that the present disclosure, as disclosed and limited in this specification, extend to all alternative combinations of two or more individual features mentioned or apparent in the text and/or in the accompanying drawings. All of these different combinations constitute a plurality of alternative aspects of the present disclosure. The embodiments described in this specification illustrate the optimal ways known for implementing the present disclosure and will enable those skilled in the art to utilize the present disclosure.

## Claims

1. A valve assembly, comprising a valve bonnet, a valve core, and a driving device, wherein the valve bonnet has a first accommodating cavity, the valve core is located in the first accommodating cavity, and the driving device is capable of driving the valve core to move along an inner wall of the first accommodating cavity;
the valve core has a second accommodating cavity, a chamber is formed between the valve core and the valve bonnet, and the second accommodating cavity is in communication with the first accommodating cavity outside the chamber; and
fluid flowing into the valve bonnet at least comprises a first branch and a second branch, the first branch flows out through a first channel where the chamber is located, and the second branch flows out through a second channel outside the chamber.

2. The valve assembly according to claim 1, wherein the driving device comprises a solenoid coil, a shaft rod, a stationary iron core, and a movable iron core, the valve assembly further comprises a sleeve fitted over the stationary iron core and the movable iron core, the solenoid coil is fitted over the sleeve, the stationary iron core is fixedly connected to the sleeve, the movable iron core is movably mounted in the sleeve, and the valve core is connected to the movable iron core through the shaft rod;
the valve core has a first working position and a second working position; and
the valve core is in the second working position when the movable iron core is magnetically attracted with the stationary iron core, and the valve core is in the first working position when the movable iron core is separated from the stationary iron core to a maximum distance; or the valve core is in the first working position when the movable iron core is magnetically attracted with the stationary iron core, and the valve core is in the second working position when the movable iron core is separated from the stationary iron core to the maximum distance.

3. The valve assembly according to claim 2, wherein the valve assembly further comprises a reset member disposed between the stationary iron core and the movable iron core.

4. The valve assembly according to claim 1, wherein the valve core comprises a pipe body and a top plate, the top plate is fixedly connected to one end of the pipe body and is provided with a through-hole, another end of the pipe body is open and is provided with an annular protrusion, and an edge of the top plate and an edge of the annular protrusion are separately connected to an inner wall of the valve bonnet in a sealing manner to form the chamber among an outer wall of the pipe body, the inner wall of the valve bonnet, the top plate and the annular protrusion; an inner cavity of the pipe body is the second accommodating cavity; and the second accommodating cavity is in communication with the first accommodating cavity at two ends of the valve core.

5. The valve assembly according to claim 1, wherein the valve bonnet has at least one first communication hole and at least one second communication hole, the driving device comprises a first magnetic attraction structure and a second magnetic attraction structure, and the valve core is connected to the second magnetic attraction structure;
the second magnetic attraction structure is magnetically attracted with or separated from the first magnetic attraction structure, wherein the second magnetic attraction structure has a separation position, a transition position, and an attraction position arranged in sequence along a direction approaching the first magnetic attraction structure;
when the second magnetic attraction structure is in the separation position, and during movement of the second magnetic attraction structure from the separation position to the transition position, the valve core is in a stationary state, and the second accommodating cavity is in communication with the first communication hole; and
during movement of the second magnetic attraction structure from the transition position to the attraction position, the second accommodating cavity is in communication with the second communication hole.

6. The valve assembly according to claim 5, wherein the second magnetic attraction structure comprises a magnetic attraction part, a shaft rod and a buffer member; one end of the magnetic attraction part is magnetically attracted with or separated from the first magnetic attraction structure, and another end of the magnetic attraction part is connected to the shaft rod; a portion of the shaft rod located in the second accommodating cavity is provided with a limiting protruding part; the buffer member is fitted over the shaft rod and located between the limiting protruding part and the top plate; during the movement of the second magnetic attraction structure from the separation position to the transition position, the buffer member is compressed, and the valve core is in the stationary state; and during the movement of the second magnetic attraction structure from the transition position to the attraction position, the buffer member is compressed, and the shaft rod drives the valve core to move towards the first magnetic attraction structure.

7. The valve assembly according to any one of claims 1 to 6, wherein a circumferential outer surface of the valve bonnet is provided with a plurality of grooves arranged along an axial direction of the valve bonnet; a groove bottom of each groove is provided with a communication hole; and two adjacent grooves opposite to the valve core are in communication with each other through the chamber.

8. The valve assembly according to claim 7, wherein the communication hole comprises a plurality of communication sub-holes that are spaced apart along a circumferential direction of each groove.

9. The valve assembly according to claim 8, wherein the communication sub-holes are elongated holes, and a length of each elongated hole along a circumferential direction of the valve bonnet is greater than a length of each elongated hole along the axial direction of the valve bonnet.

10. A solenoid valve, comprising a valve seat and the valve assembly according to any one of claims 1 to 9, wherein the valve seat has a valve cavity, and the valve bonnet is fixedly mounted in the valve cavity; the valve seat is provided with a first flow sub-port, a second flow sub-port, a second flow port and a third flow port that are in communication with the valve cavity, the valve bonnet is provided with communication holes at least at positions corresponding to the second flow sub-port, the second flow port and the third flow port; the communication holes are in communication with the chamber or in communication with the first accommodating cavity outside the chamber;
the valve core has a first working position and a second working position;
the valve core is configured in such a way that when in the first working position, the first channel comprises the second flow sub-port, the communication hole corresponding to the second flow sub-port, the chamber, the communication hole corresponding to the second flow port, and the second flow port, all of which are in communication in sequence, and the second channel comprises the first flow sub-port, the first accommodating cavity located outside the chamber, the communication hole corresponding to the third flow port, and the third flow port, all of which are in communication in sequence;
the valve core is further configured in such a way that when in the second working position, the first channel comprises the second flow sub-port, the communication hole corresponding to the second flow sub-port, the chamber, the communication hole corresponding to the third flow port, and the third flow port, all of which are in communication in sequence, and the second channel comprises the first flow sub-port, the first accommodating cavity located outside the chamber, the communication hole corresponding to the second flow port, and the second flow port, all of which are in communication in sequence.

11. The solenoid valve according to claim 10, wherein a circumferential outer surface of the valve bonnet is provided with a plurality of grooves arranged along an axial direction of the valve bonnet, and seal members are provided between both sides of each groove and an inner wall of the valve seat, respectively.

12. The solenoid valve according to any one of claims 10 to 11, wherein an inner wall of the valve cavity is provided with a stopper; and the valve core abuts against the stopper when the valve core is in the second working position.

13. A solenoid valve, comprising a valve seat and the valve assembly according to any one of claims 5 and 6, wherein the valve seat has a valve cavity as well as at least one first flow port, at least one second flow port, and at least one third flow port that are in communication with the valve cavity; at least a portion of the valve bonnet is located in the valve cavity, the first communication hole is provided at a position of the valve bonnet corresponding to the second flow port, and the second communication hole is provided at a position of the valve bonnet corresponding to the third flow port;
when the second magnetic attraction structure is in the separation position, and during movement of the second magnetic attraction structure from the separation position to the transition position, the at least one first flow port is in communication with the second flow port; and
during movement of the second magnetic attraction structure from the transition position to the attraction position, the at least one first flow port is in communication with the third flow port.

14. The solenoid valve according to claim 13, wherein one first flow port is provided; when the second magnetic attraction structure is in the separation position, and during the movement from the separation position to the transition position, a first flow sub-port is in communication with the second flow port through the second accommodating cavity, the through-hole, portions of the first accommodating cavity located at two ends of the valve core, and the first communication hole; when the second magnetic attraction structure is in the attraction position, the first flow sub-port is in communication with the third flow port through the first accommodating cavity corresponding to the second communication hole, and the second communication hole; or
one first flow port is provided; the chamber is formed between an outer wall of the valve core and an inner wall of the valve bonnet and is separated from the second accommodating cavity; the valve bonnet further comprises a third communication hole at a position corresponding to a second flow sub-port; when the second magnetic attraction structure is in the separation position and during the movement from the separation position to the transition position, the second flow sub-port is in communication with the third flow port through the third communication hole, the chamber and the second communication hole; and when the second magnetic attraction structure is in the attraction position, the second flow sub-port is in communication with the second flow port through the third communication hole, the chamber and the first communication hole.

15. The solenoid valve according to claim 13, wherein two first flow ports are provided and comprise a first flow sub-port and a second flow sub-port, the first flow sub-port being in communication with the second accommodating cavity; the chamber is formed between an outer wall of the valve core and an inner wall of the valve bonnet and is separated from the second accommodating cavity; the valve bonnet further comprises a third communication hole at a position corresponding to the second flow sub-port;
when the second magnetic attraction structure is in the separation position and during the movement from the separation position to the transition position, the first flow sub-port is in communication with the second flow port through the second accommodating cavity, the through-hole, the first accommodating cavity located at two ends of the valve core, and the first communication hole, and the second flow sub-port is in communication with the third flow port through the third communication hole, the chamber, and the second communication hole; and
when the second magnetic attraction structure is in the attraction position, the first flow sub-port is in communication with the third flow port through portions of the first accommodating cavity located outside the chamber, and the second communication hole, and the second flow sub-port is in communication with the second flow port through the third communication hole, the chamber, and the first communication hole.

16. The solenoid valve according to claim 10 or 15, wherein directions of the first flow sub-port, the second flow sub-port, the second flow port, and the third flow port are perpendicular to an axis of the valve bonnet.
